# EUROPÄISCHE PATENTSCHRIFT

(11) **EP 3 247 493 B1**
(45) Veröffentlichungstag und Bekanntmachung des Hinweises auf die Patenterteilung: **27.05.2020**
(21) Anmeldenummer: 16700724.4
(22) Anmeldetag: 15.01.2016
(51) Int. Cl.: B01J 23/63, B01J 37/025, B01J 35/00, B01D 53/94

(54) **DOPPELSCHICHTIGER DREIWEG-KATALYSATOR MIT VERBESSERTER ALTERUNGSSTABILITÄT**
DOUBLE LAYER THREE-WAY CATALYST WITH IMPROVED AGEING RESISTANCE
CATALYSEUR À TROIS VOIES À DOUBLE COUCHE PRÉSENTANT UNE STABILITÉ AU VIEILLISSEMENT AMÉLIORÉE

(30) Priorität: 19.01.2015 EP 15151583
(43) Veröffentlichungstag der Anmeldung: 29.11.2017
(73) Patentinhaber: Umicore AG & Co. KG, 63457 Hanau-Wolfgang (DE)
(72) Erfinder: DESPRES, Joel, 63517 Rodenbach (DE); RICHTER, Joerg-Michael, 60389 Frankfurt (DE); ROESCH, Martin, 63110 Rodgau (DE); SCHICHTEL, Nicole, 35510 Butzbach Hoch-Weisel (DE); SCHMIDT, Marcus, 65462 Ginsheim (DE); SCHOENHABER, Jan, 64287 Darmstadt (DE); WOLF, Anke, 64285 Darmstadt (DE); SPIESS, Stephanie, 64289 Darmstadt (DE)
(86) Internationale Anmeldenummer: PCT/EP2016/050718
(87) Internationale Veröffentlichungsnummer: WO 2016/116356

(56) Entgegenhaltungen:
- EP-A2- 1 900 416
- WO-A1-2009/012348
- WO-A2-2011/056768
- US-A1- 2010 263 357

## Beschreibung

Die vorliegende Erfindung betrifft einen Dreiweg-Katalysator, der aus zwei übereinander liegenden, katalytisch aktiven Schichten aufgebaut ist und der sich für die Reinigung der Abgase von Verbrennungsmotoren eignet.

Dreiweg-Katalysatoren werden für die Reinigung der Abgase von im Wesentlichen stöchiometrisch betriebenen Verbrennungsmotoren eingesetzt. Beim stöchiometrischen Betrieb entspricht die dem Motor zugeführte Menge Luft genau der zur kompletten Verbrennung des Kraftstoffs benötigten Menge. In diesem Fall beträgt das Verbrennungsluftverhältnis λ, auch Luftzahl genannt, genau 1. Dreiweg-Katalysatoren sind in der Nähe von λ = 1 in der Lage, Kohlenwasserstoffe, Kohlenmonoxid und Stickoxide gleichzeitig zu unschädlichen Komponenten umzusetzen.
Als katalytisch aktive Materialien werden in der Regel Platingruppenmetalle, insbesondere Platin, Palladium und Rhodium eingesetzt, die beispielsweise auf γ-Aluminiumoxid als Trägermaterial vorliegen. Daneben enthalten Dreiweg-Katalysatoren Sauerstoffspeichermaterialien, beispielsweise Cer/Zirkonium-Mischoxide. In letzteren stellt Ceroxid, ein Seltenerdmetalloxid, die für die Sauerstoffspeicherung grundlegende Komponente dar. Neben Zirkoniumoxid und Ceroxid können diese Materialien zusätzliche Bestandteile wie weitere Seltenerdmetalloxide oder Erdalkalimetalloxide enthalten. Sauerstoffspeichermaterialien werden durch Aufbringen von katalytisch aktiven Materialien wie Platingruppenmetallen aktiviert und dienen somit auch als Trägermaterial für die Platingruppenmetalle.

Die Bestandteile eines Dreiweg-Katalysators können in einer einzigen Beschichtungsschicht auf einem inerten Katalysatorträger vorliegen, siehe beispielsweise EP1541220A1.
Häufig kommen aber doppelschichtige Katalysatoren zum Einsatz, die eine Trennung verschiedener katalytischer Vorgänge und damit eine optimale Abstimmung der katalytischen Wirkungen in den beiden Schichten ermöglichen. Katalysatoren der letztgenannten Art werden zum Beispiel in WO95/35152A1, WO2008/000449A2, EPO885650A2, EP1046423A2, EP1726359A1 und EP1974809A1 offenbart.

Die EP1974809A1 offenbart doppelschichtige Dreiweg-Katalysatoren, die in beiden Schichten Cer/Zirkonium-Mischoxide enthalten, wobei das Cer/Zirkonium-Mischoxid in der oberen Schicht jeweils einen höheren Anteil an Zirkonium aufweist als dasjenige in der unteren Schicht.

Die EP 1900416A2 beschreibt doppelschichtige Dreiweg-Katalysatoren, die in beiden Schichten Mischoxide aus Cer, Zirkonium und Niob und in der unteren Schicht zusätzlich CeZrYLa-Aluminiumoxid-Teilchen enthalten.
Die EP1726359A1 beschreibt doppelschichtige Dreiweg-Katalysatoren, die in beiden Schichten Cer/Zirkonium/Lanthan/Neodym-Mischoxide mit einem Zirkoniumgehalt von mehr als 80 Mol-% enthalten, wobei das Cer/Zirkonium/Lanthan/Neodym-Mischoxid in der oberen Schicht jeweils einen höheren Anteil an Zirkonium aufweisen kann als dasjenige in der unteren Schicht.
Auch die WO2008/000449A2 offenbart doppelschichtige Katalysatoren, die in beiden Schichten Cer/Zirkonium-Mischoxide enthalten und wobei wiederum das Mischoxid in der oberen Schicht einen höheren Anteil an Zirkonium aufweist. Zum Teil können die Cer/Zirkonium-Mischoxide auch durch Cer/Zirkonium/Lanthan/Neodym- bzw. Cer/Zirkonium/Lanthan/ Yttrium-Mischoxide ersetzt sein.
Die WO2009/012348A1 beschreibt sogar dreischichtige Katalysatoren, wobei nur die mittlere und die obere Schicht Sauerstoffspeichermaterialien enthalten.
Die US2010/0263357A1 offenbart doppelschichtige Dreiweg-Katalysatoren, die in beiden Schichten Cer/Zirkonium-Mischoxide enthalten.

Die ständig steigenden Anforderungen an die Emissionsminderung von Verbrennungsmotoren machen eine stetige Weiterentwicklung der Katalysatoren notwendig. Die Dauerhaltbarkeitsanforderungen wurden in Europa mit der Gesetzgebungsstufe Euro 5 auf 160.000 km erhöht. In den USA werden sogar bis zu 150.000 Meilen (241.402 km) Dauerhaltbarkeit vorausgesetzt.
Daher gewinnt die Alterungsstabilität der Katalysatoren noch mehr Bedeutung. Als wichtige Kriterien für die Aktivität nach Alterung dienen zum einen die Anspringtemperaturen des Katalysators für die Umsetzung der Schadstoffe und zum anderen sein dynamisches Umsatzvermögen. Die Anspringtemperatur für einen Schadstoff gibt an, ab welcher Temperatur dieser Schadstoff zu mehr als zum Beispiel 50 % umgesetzt wird. Je niedriger diese Temperaturen sind, umso früher können die Schadstoffe nach einem Kaltstart umgesetzt werden. Bei Volllast können direkt am Motorausgang Abgastemperaturen von bis zu 1050 °C auftreten. Je besser die Temperaturstabilität des Katalysators ist, umso näher kann er am Motor angeordnet werden. Dies verbessert ebenfalls die Abgasreinigung nach einem Kaltstart.
Die europäische Abgasgesetzgebung sieht mit Inkrafttreten der Stufe Euro 6c ab September 2017 Abgasmessungen unter realen Bedingungen auf der Straße vor. Je nach Fahrbedingungen können dadurch deutlich anspruchsvollere Anforderungen an den Katalysator entstehen, insbesondere im Hinblick auf die dynamische Umsetzung von Kohlenmonoxid und Stickoxiden. Diese hohen Anforderungen müssen auch nach starker Alterung vom Katalysator bewältigt werden. Auch deshalb ist eine weitere Erhöhung der Alterungsstabilität von Dreiweg-Katalysatoren erforderlich.
Die Katalysatoren nach dem oben zitierten Stand der Technik weisen schon sehr gute Eigenschaften bezüglich Anspringtemperaturen und dynamischem Umsatzvermögen nach Alterung auf. Die gesteigerten gesetzlichen Vorgaben machen jedoch die Suche nach noch besseren Katalysatoren notwendig.
Es war daher die Aufgabe dieser Erfindung, einen Katalysator zur Verfügung zu stellen, der durch seine höhere Temperaturstabilität gegenüber den Katalysatoren des Standes der Technik weiter verringerte Anspringtemperaturen und ein verbessertes dynamisches Umsatzvermögen nach Alterung aufweist.
Es wurde nun überraschend gefunden, dass diese Aufgabe gelöst werden kann, wenn man die als Bestandteile der Sauerstoffspeichermaterialien vorliegenden Seltenerdelemente, sowie gegebenenfalls die Platingruppenmetalle, in bestimmter Weise auf die beiden Schichten eines doppelschichtigen Dreiweg-Katalysators verteilt.

Gegenstand der vorliegenden Erfindung ist somit ein Katalysator, der zwei Schichten auf einem inerten Katalysatorträger umfasst, wobei
- eine Schicht A mindestens ein Platingruppenmetall, sowie ein Cer/Zirkonium/SE-Mischoxid enthält und
- eine auf Schicht A aufgebrachte Schicht B mindestens ein Platingruppenmetall, sowie ein Cer/Zirkonium/SE-Mischoxid enthält, wobei SE für ein Seltenerdmetall außer Cer steht,
dadurch gekennzeichnet, dass der Anteil des SE-Oxids im Cer/Zirkonium/ SE-Mischoxid von Schicht A kleiner ist als der Anteil des SE-Oxids im Cer/Zirkonium/SE-Mischoxid von Schicht B, jeweils gerechnet in Gew.-% und bezogen auf das Cer/Zirkonium/SE-Mischoxid, wobei das SE-Oxid in den Cer/Zirkonium/SE-Mischoxiden eine Mischung aus Lanthanoxid und Yttriumoxid ist.

Schicht A und Schicht B enthalten als Platingruppenmetall unabhängig voneinander insbesondere Platin, Palladium, Rhodium oder Mischungen aus mindestens zwei dieser Platingruppenmetalle.
In Ausführungsformen der vorliegenden Erfindung enthält Schicht A Platin, Palladium oder Platin und Palladium und Schicht B Palladium, Rhodium oder Palladium und Rhodium.
In weiteren Ausführungsformen der vorliegenden Erfindung ist der erfindungsgemäße Katalysator frei von Platin.
Insbesondere enthält Schicht A Palladium und Schicht B Rhodium oder Palladium und Rhodium.

Als Trägermaterialien für die Platingruppenmetalle können in Schicht A und/oder in Schicht B die Cer/Zirkonium/SE-Mischoxide dienen. Darüber hinaus können sie in Schicht A und/oder in Schicht B aber auch vollständig oder zum Teil auf aktivem Aluminiumoxid geträgert sein.
In Ausführungsformen der vorliegenden Erfindung enthalten deshalb Schicht A und Schicht B aktives Aluminiumoxid. Besonders bevorzugt ist es, wenn das aktive Aluminiumoxid durch eine Dotierung, insbesondere mit Lanthanoxid, stabilisiert ist. Bevorzugte aktive Aluminiumoxide enthalten 1 bis 6 Gew.-%, insbesondere 3 bis 4 Gew.-%, Lanthanoxid (La₂O₃).

Der Begriff "aktives Aluminiumoxid" ist dem Fachmann bekannt. Er bezeichnet insbesondere γ-Aluminiumoxid mit einer Oberfläche von 100 bis 200 m²/g. Aktives Aluminiumoxid ist in der Literatur vielfach beschrieben und am Markt erhältlich.

Der Begriff "Cer/Zirkonium/SE-Mischoxid" im Sinne vorliegender Erfindung schließt physikalische Mischungen aus Ceroxid, Zirkoniumoxid und SE-Oxid aus. Vielmehr sind "Cer/Zirkonium/SE-Mischoxide" durch eine weitgehend homogene, dreidimensionale Kristallstruktur gekennzeichnet, die idealerweise frei ist von Phasen aus reinem Ceroxid, Zirkoniumoxid bzw. SE-Oxid. Je nach Herstellungsverfahren können aber auch nicht vollständig homogene Produkte entstehen, die in der Regel ohne Nachteil verwendet werden können.

Als Seltenerdmetalloxide in den Cer/Zirkonium/SE-Mischoxiden kommen beispielsweise Lanthanoxid, Yttriumoxid, Praseodymoxid, Neodymoxid, Samariumoxid und Mischungen aus einem oder mehreren dieser Metalloxide in Betracht (nicht-erfindungsgemäß). Gemäß der vorliegenden Erfindung ist das SE-Oxid in den Cer/Zirkonium/SE-Mischoxiden eine Mischung aus Lanthanoxid und Yttriumoxid.

Erfindungsgemäß ist der Anteil des SE-Oxids im Cer/Zirkonium/SE-Mischoxid von Schicht A kleiner als der Anteil des SE-Oxids im Cer/Zirkonium/SE-Mischoxid von Schicht B, jeweils gerechnet in Gew.-% und bezogen auf das Cer/Zirkonium/SE-Mischoxid.

Der Anteil des SE-Oxids in Schicht A beträgt insbesondere 1 bis 12 Gew.-%, bevorzugt 3 bis 10 Gew.-% und besonders bevorzugt 6 bis 9 Gew.-%, jeweils bezogen auf das Cer/Zirkonium/SE-Mischoxid.
Der Anteil des SE-Oxids in Schicht B beträgt insbesondere 2 bis 25 Gew.-%, bevorzugt 10 bis 20 Gew.-% und besonders bevorzugt 14 bis 18 Gew.-%, jeweils bezogen auf das Cer/Zirkonium/SE-Mischoxid.

Erfindungsgemäß kann das Verhältnis von Ceroxid zu Zirkoniumoxid in den Cer/Zirkonium/SE-Mischoxiden in weiten Grenzen variieren. In Schicht A beträgt es beispielsweise 0,1 bis 1,0, bevorzugt von 0,2 bis 0,7, besonders bevorzugt von 0,3 bis 0,5.
In Schicht B beträgt es beispielsweise 0,1 bis 1,0, bevorzugt von 0,2 bis 0,7, besonders bevorzugt von 0,3 bis 0,5.

Die Cer/Zirkonium/SE-Mischoxide der vorliegenden Erfindung enthalten insbesondere kein Aluminiumoxid.

In Ausführungsformen der vorliegenden Erfindung enthalten eine Schicht oder beide Schichten Erdalkaliverbindungen wie z.B. Bariumoxid oder Bariumsulfat. Bevorzugte Ausführungsformen enthalten Bariumsulfat in Schicht A. Die Menge an Bariumsulfat beträgt insbesondere 5 bis 20 g/l Volumen des inerten Katalysatorträgers.

In weiteren Ausführungsformen der vorliegenden Erfindung enthalten eine oder beide Schichten zusätzlich Additive wie Seltenerdverbindungen wie z.B. Lanthanoxid und/oder Binder, wie z.B. Aluminiumverbindungen. Diese Additive werden in Mengen verwendet, die in weiten Grenzen variieren können und die der Fachmann im konkreten Fall mit einfachen Mitteln bestimmen kann.

Eine Ausführungsform der vorliegenden Erfindung betrifft einen Katalysator, der zwei Schichten auf einem inerten Katalysatorträger umfasst, wobei
- eine Schicht A Palladium, aktives Aluminiumoxid, sowie ein Cer/Zirkonium/Lanthan/Yttrium-Mischoxid enthält und
- eine auf Schicht A aufgebrachte Schicht B Rhodium oder Palladium und Rhodium, aktives Aluminiumoxid, sowie ein Cer/Zirkonium/Lanthan/ Yttrium-Mischoxid enthält,
dadurch gekennzeichnet, dass der Anteil der Summe an Lanthanoxid und Yttriumoxid im Cer/Zirkonium/Lanthan/Yttrium-Mischoxid von Schicht A kleiner ist als der Anteil der Summe an Lanthanoxid und Yttriumoxid im Cer/Zirkonium/ Lanthan/Yttrium-Mischoxid von Schicht B, jeweils gerechnet in Gew.-% und bezogen auf das Cer/Zirkonium/Lanthan/Yttrium-Mischoxid.

In diesem Fall ist es bevorzugt, wenn der Anteil der Summe aus Lanthanoxid und Yttriumoxid im Cer/Zirkonium/Lanthan/Yttrium-Mischoxid der Schicht A 6 bis 9 Gew.-% bezogen auf das Cer/Zirkonium/Lanthan/ Yttrium-Mischoxid der Schicht A und im Cer/Zirkonium/Lanthan/Yttrium-Mischoxid der Schicht B 14 bis 18 Gew.-% bezogen auf das Cer/Zirkonium/ Lanthan/Yttrium-Mischoxid der Schicht B beträgt, jeweils gerechnet in Gew.-% und bezogen auf das Cer/Zirkonium/Lanthan/Yttrium-Mischoxid.

In einer weiteren Ausführungsform der vorliegenden Erfindung liegt Schicht A direkt auf dem inerten Katalysatorträger, d.h. zwischen dem inerten Katalysatorträger und Schicht A befindet sich keine weitere Schicht bzw. kein "undercoat".
In einer weiteren Ausführungsform der vorliegenden Erfindung steht Schicht B mit dem Abgasstrom in direktem Kontakt, d.h. auf Schicht B befindet sich keine weitere Schicht bzw. kein "overcoat".

In einer weiteren Ausführungsform der vorliegenden Erfindung besteht der erfindungsgemäße Katalysator aus den Schichten A und B auf einem inerten Katalysatorträger. Das bedeutet, dass Schicht A direkt auf dem inerten Katalysatorträger liegt, Schicht B mit dem Abgasstrom in direktem Kontakt steht und dass weitere Schichten nicht vorhanden sind.

Als katalytisch inerter Katalysatorträger eignen sich Wabenkörper aus Keramik oder Metall mit einem Volumen V, die parallele Strömungskanäle für die Abgase des Verbrennungsmotors aufweisen. Es kann sich sowohl um sogenannte Durchflusswabenkörper, als auch um Wandflussfilter handeln.

Die Wandflächen der Strömungskanäle werden erfindungsgemäß mit den beiden Katalysatorschichten A und B beschichtet. Zur Beschichtung des Katalysatorträgers mit Schicht A werden die für diese Schicht vorgesehenen Feststoffe in Wasser suspendiert und mit der so erhaltenen Beschichtungssuspension der Katalysatorträger beschichtet. Der Vorgang wird mit einer Beschichtungssuspension wiederholt, die die für Schicht B vorgesehenen Feststoffe in Wasser suspendiert enthält.
Bevorzugt werden sowohl Schicht A, als auch Schicht B über die gesamte Länge des inerten Katalysatorträgers beschichtet. Dies bedeutet, dass Schicht B Schicht A vollständig überdeckt und folglich nur Schicht B mit dem Abgasstrom in direkten Kontakt kommt.
Bei den folgenden Beispielen 1 bis 3, sowie Vergleichsbeispiel 1 wurden Zweischichtkatalysatoren durch zweimalige Beschichtung von Durchflusswabenträgern aus Keramik mit 93 Zellen pro cm² und der Wandstärke 0,09 mm, sowie der Abmessungen 11,8 cm Durchmesser und 10,5 cm Länge hergestellt. Dazu wurden jeweils zwei verschiedene Suspensionen für Schicht A und B hergestellt. Dann wurde der Träger zunächst mit der Suspension für Schicht A beschichtet und anschließend 4 Stunden bei 500°C in Luft kalziniert. Danach wurde der mit Schicht A beschichtete Träger mit der Suspension für Schicht B beschichtet und anschließend unter den gleichen Bedingungen wie bei Schicht A kalziniert.

### Beispiel 1

Ein Zweischicht-Katalysator wurde hergestellt, indem zunächst zwei Suspensionen hergestellt wurden. Die Zusammensetzung der ersten Suspension für Schicht A betrug (bezogen auf das Volumen des Katalysatorträgers)
40 g/L mit 4 Gew.-% La₂O₃ stabilisiertes aktiviertes Aluminiumoxid
40 g/L Cer/Zirkonium/Lanthan/Yttrium-Mischoxid mit 25 Gew.-% CeO₂,
67,5 Gew.-% ZrO₂, 3,5 Gew.-% La₂O₃ und 4 Gew.-% Y₂O₃
5 g/L BaSO₄
3,178 g/L Pd
Die Zusammensetzung der zweiten Suspension für Schicht B betrug (bezogen auf das Volumen des Katalysatorträgers)
60 g/L mit 4 Gew.-% La₂O₃ stabilisiertes aktiviertes Aluminiumoxid
47 g/L Cer/Zirkonium/Lanthan/Yttrium-Mischoxid mit 24 Gew.-% CeO₂, 60 Gew.-% ZrO₂, 3,5 Gew.-% La₂O₃ und 12,5 Gew.-% Y₂O₃
0,177 g/L Pd
0,177 g/L Rh

### Beispiel 2

Ein Zweischicht-Katalysator wurde analog zu Beispiel 1 hergestellt. Die Zusammensetzung der ersten Suspension für Schicht A betrug
40 g/L mit 4 Gew.-% La₂O₃ stabilisiertes aktiviertes Aluminiumoxid
40 g/L Cer/Zirkonium/Lanthan/Yttrium-Mischoxid mit 20,5 Gew.-% CeO₂,
67,5 Gew.-% ZrO₂, 4,5 Gew.-% La₂O₃ und 7,5 Gew.-% Y₂O₃
5 g/L BaSO₄
3,178 g/L Pd
Die Zusammensetzung der zweiten Suspension für Schicht B betrug 60 g/L mit 4 Gew.-% La₂O₃ stabilisiertes aktiviertes Aluminiumoxid 47 g/L Cer/Zirkonium/Lanthan/Yttrium-Mischoxid mit 20 Gew.-% CeO₂, 60 Gew.-% ZrO₂, 5 Gew.-% La₂O₃ und 15 Gew.-% Y₂O₃
0,177 g/L Pd
0,177 g/L Rh

### Beispiel 3

Ein Zweischicht-Katalysator wurde analog zu Beispiel 1 hergestellt. Die Zusammensetzung der ersten Suspension für Schicht A betrug 40 g/L mit 4 Gew.-% La₂O₃ stabilisiertes aktiviertes Aluminiumoxid
40 g/L Cer/Zirkonium/Lanthan/Yttrium-Mischoxid mit 20,5 Gew.-% CeO₂, 67,5 Gew.-% ZrO₂, 4,5 Gew.-% La₂O₃ und 7,5 Gew.-% Y₂O₃
5 g/L BaSO₄
3,178 g/L Pd
Die Zusammensetzung der zweiten Suspension für Schicht B betrug
60 g/L mit 4 Gew.-% La₂O₃ stabilisiertes aktiviertes Aluminiumoxid
47 g/L Cer/Zirkonium/Lanthan/Yttrium-Mischoxid mit 15 Gew.-% CeO₂, 60 Gew.-% ZrO₂, 7 Gew.-% La₂O₃ und 18 Gew.-% Y₂O₃
0,177 g/L Pd
0,177 g/L Rh

### Vergleichsbeispiel 1

Ein Zweischicht-Katalysator wurde analog zu Beispiel 1 hergestellt. Die Zusammensetzung der ersten Suspension für Schicht A betrug
40 g/L mit 4 Gew.-% La₂O₃ stabilisiertes aktiviertes Aluminiumoxid
40 g/L Cer/Zirkonium/Lanthan/Yttrium-Mischoxid mit 25 Gew.-% CeO₂,
67,5 Gew.-% ZrO₂, 3,5 Gew.-% La₂O₃ und 4 Gew.-% Y₂O₃
5 g/L BaSO₄
3,178 g/L Pd
Die Zusammensetzung der zweiten Suspension für Schicht B betrug
60 g/L mit 4 Gew.-% La₂O₃ stabilisiertes aktiviertes Aluminiumoxid
47 g/L Cer/Zirkonium/Lanthan/Yttrium-Mischoxid mit 25 Gew.-% CeO₂, 67,5 Gew.-% ZrO₂, 3,5 Gew.-% La₂O₃ und 4 Gew.-% Y₂O₃
0,177 g/L Pd
0,177 g/L Rh

Beispiel 1 und Vergleichsbeispiel 1 wurden in einer Motorprüfstandsalterung gealtert. Die Alterung besteht aus einer Schubabschaltungsalterung mit 950°C Abgastemperatur vor Katalysatoreingang (Maximale Betttemperatur 1030°C). Die Alterungszeit betrug 76 Stunden.

Anschließend wurden an einem Motorprüfstand das Anspringverhalten bei konstanter mittlerer Luftzahl λ und die dynamische Umsetzung bei Änderung von λ geprüft.

Tabelle 1 enthält die Temperaturen Tso, bei denen jeweils 50% der betrachteten Komponente umgesetzt werden. Dabei wurde das Anspringverhalten bei stöchiometrischer Abgaszusammensetzung (λ = 0,999 mit ±3,4% Amplitude) bestimmt.

**Tabelle 1: Ergebnisse des Anspringverhaltens nach Alterung für Beispiel 1 und Vergleichsbeispiel 1**

| | T₅₀ HC stöch | T₅₀ CO stöch | T₅₀ NOx stöch |
|---|---|---|---|
| Vergleichsbeispiel 1 | 391 | 402 | 398 |
| Beispiel 1 | 381 | 391 | 388 |

Das dynamische Umsatzverhalten wurde in einem Bereich für λ von 0,99 bis 1,01 bei einer konstanten Temperatur von 510°C bestimmt. Die Amplitude von λ betrug dabei ±3,4%. Tabelle 2 enthält den Umsatz am Schnittpunkt der CO- und der NOx-Umsatzkurven, sowie den zugehörigen HC-Umsatz.

**Tabelle 2: Ergebnisse des dynamischen Umsatzverhaltens nach Alterung für Beispiel 1 und Vergleichsbeispiel 1**

| | CO/NOx Umsatz am Kreuzungspunkt | HC Umsatz am λ des CO/NOx-Kreuzungspunkts |
|---|---|---|
| Vergleichsbeispiel 1 | 73,5% | 92 |
| Beispiel 1 | 79% | 93 |

Das erfindungsgemäße Beispiel 1 zeigt eine deutliche Verbesserung beim Anspringverhalten und beim dynamischen CO/NOx-Umsatz nach Alterung.

Bei den folgenden Beispielen 4 und 5 sowie Vergleichsbeispiel 2 wurden Zweischichtkatalysatoren durch zweimalige Beschichtung von

Durchflusswabenträgern aus Keramik mit 93 Zellen pro cm² und der Wandstärke 0,1 mm, sowie der Abmessungen 10,2 cm Durchmesser und 15,2 cm Länge hergestellt. Dazu wurden jeweils zwei verschiedene Suspensionen für Schicht A und B hergestellt. Dann wurde der Träger zunächst mit der Suspension für Schicht A beschichtet und anschließend 4 Stunden bei 500°C in Luft kalziniert. Danach wurde der mit Schicht A beschichtete Träger mit der Suspension für Schicht B beschichtet und anschließend unter den gleichen Bedingungen wie bei Schicht A kalziniert.

### Beispiel 4

Ein Zweischicht-Katalysator wurde hergestellt, indem zunächst zwei Suspensionen hergestellt wurden. Die Zusammensetzung der ersten Suspension für Schicht A betrug (bezogen auf das Volumen des Katalysatorträgers)
70 g/L mit 4 Gew.-% La₂O₃ stabilisiertes aktiviertes Aluminiumoxid
50 g/L Cer/Zirkonium/Lanthan/Yttrium-Mischoxid mit 39 Gew.-% CeO₂, 51 Gew.-% ZrO₂, 3 Gew.-% La₂O₃ und 7 Gew.-% Y₂O₃
5 g/L BaSO₄
1,483 g/L Pd
Die Zusammensetzung der zweiten Suspension für Schicht B betrug (bezogen auf das Volumen des Katalysatorträgers)
70 g/L mit 4 Gew.-% La₂O₃ stabilisiertes aktiviertes Aluminiumoxid
65 g/L Cer/Zirkonium/Lanthan/Yttrium-Mischoxid mit 24 Gew.-% CeO₂, 60 Gew.-% ZrO₂, 3,5 Gew.-% La₂O₃ und 12,5 Gew.-% Y₂O₃
0,177 g/L Pd
0,177 g/L Rh

### Beispiel 5

Ein Zweischicht-Katalysator wurde analog zu Beispiel 4 hergestellt. Die Zusammensetzung der ersten Suspension für Schicht A betrug
70 g/L mit 4 Gew.-% La₂O₃ stabilisiertes aktiviertes Aluminiumoxid
50 g/ Cer/Zirkonium/Lanthan/Yttrium-Mischoxid mit 25 Gew.-% CeO2, 67,5 Gew.-% ZrO₂, 3,5 Gew.-% La₂O₃ und 4 Gew.-% Y₂O₃
5 g/L BaSO₄
1,483 g/L Pd
Die Zusammensetzung der zweiten Suspension für Schicht B betrug
70 g/L mit 4 Gew.-% La₂O₃ stabilisiertes aktiviertes Aluminiumoxid
65 g/L Cer/Zirkonium/Lanthan/Yttrium-Mischoxid mit 24 Gew.-% CeO₂, 60 Gew.-% ZrO₂, 3,5 Gew.-% La₂O₃ und 12,5 Gew.-% Y₂O₃
0,177 g/L Pd
0,177 g/L Rh

### Vergleichsbeispiel 2

Ein Zweischicht-Katalysator wurde analog zu Beispiel 4 hergestellt. Die Zusammensetzung der ersten Suspension für Schicht A betrug 70 g/L mit 4 Gew.-% La₂O₃ stabilisiertes aktiviertes Aluminiumoxid 50 g/L Cer/Zirkonium/Lanthan/Yttrium-Mischoxid mit 39 Gew.-% CeO₂, 51 Gew.-% ZrO₂, 3 Gew.-% La₂O₃ und 7 Gew.-% Y₂O₃
5 g/L BaSO₄
1,483 g/L Pd
Die Zusammensetzung der zweiten Suspension für Schicht B betrug
70 g/L mit 4 Gew.-% La₂O₃ stabilisiertes aktiviertes Aluminiumoxid
65 g/L Cer/Zirkonium/Lanthan/Yttrium-Mischoxid mit 22 Gew.-% CeO₂, 68 Gew.-% ZrO₂, 2 Gew.-% La₂O₃, 5 Gew.-% Nd₂O₃ und 3 Gew.-% Y₂O₃
0,177 g/L Pd
0,177 g/L Rh

Beispiele 4 und 5, sowie Vergleichsbeispiel 2 wurden in einer Motorprüfstandsalterung gealtert. Die Alterung besteht aus einer Schubabschaltungsalterung mit 950°C Abgastemperatur vor Katalysatoreingang (Maximale Betttemperatur 1030°C). Die Alterungszeit betrug 76 Stunden.
Anschließend wurden an einem Motorprüfstand das Anspringverhalten bei konstanter mittlerer Luftzahl λ und die dynamische Umsetzung bei Änderung von λ geprüft.

Tabelle 3 enthält die Temperaturen Tso, bei denen jeweils 50% der betrachteten Komponente umgesetzt werden. Dabei wurde das Anspringverhalten bei stöchiometrischer Abgaszusammensetzung (λ = 0,999 mit ±3,4% Amplitude) und bei leicht magerer Abgaszusammensetzung (λ = 1,05 ohne Amplitude) bestimmt.

**Tabelle 3: Ergebnisse des Anspringverhaltens nach Alterung für Beispiel 4 und 5 und Vergleichsbeispiel 2**

| | T₅₀ HC stöch | T₅₀ CO stöch | T₅₀ NOx stöch | T₅₀ HC mager | T₅₀ CO mager |
|---|---|---|---|---|---|
| Vergleichsbeispiel 2 | 403 | 420 | 416 | 383 | 382 |
| Beispiel 4 | 391 | 411 | 401 | 371 | 369 |
| Beispiel 5 | 384 | 397 | 392 | 370 | 369 |

Das dynamische Umsatzverhalten wurde in einem Bereich für λ von 0,99 bis 1,01 bei einer konstanten Temperatur von 510°C bestimmt. Die Amplitude von λ betrug dabei ±3,4%. Tabelle 4 enthält den Umsatz am Schnittpunkt der CO- und der NOx-Umsatzkurven, sowie den zugehörigen HC-Umsatz.

**Tabelle 4: Ergebnisse des dynamischen Umsatzverhaltens nach Alterung für Beispiel 4 und 5 und Vergleichsbeispiel 2**

| | CO/NOx Kreuzungs-punkt | HC Umsatz am Lambda des CO/NOx-Kreuzungspunkts |
|---|---|---|
| Vergleichsbeispiel 2 | 81,5% | 95% |
| Beispiel 4 | 86,5% | 95,5% |
| Beispiel 5 | 95% | 96,5% |

Die erfindungsgemäßen Beispiele 4 und 5 zeigen eine deutliche Verbesserung beim Anspringverhalten und beim dynamischen CO/NOx-Umsatz nach Alterung, wobei Beispiel 5 die größte Aktivität aufweist.

Weitere nicht-erfindungsgemäße Beispiele wurden analog Beispiel 5 angefertigt, mit dem Unterschied, dass in den Cer/Zirkonium/Seltenerdmetall-Mischoxiden Seltenerdmetalloxide (SEₓO_{y}) wie in Tabelle 5 angegeben verwendet wurden.

**Tabelle 5**

| | | | | SEₓO_{y} 1 | | SEₓO_{y} 2 | |
|---|---|---|---|---|---|---|---|
| Beispiel | Schicht | Gew. -% CeO₂ | Gew.-% ZrO₂ | | Gew.-% | | Gew.-% |
| 6 | A | 40 | 50 | La₂O₃ | 5 | - | - |
| | B | 30 | 55 | La₂O₃ | 12 | - | - |
| 7 | A | 40 | 50 | Y₂O₃ | 7,5 | - | - |
| | B | 30 | 55 | Y₂O₃ | 15 | - | - |
| 8 | A | 40 | 50 | La₂O₃ | 5 | Pr₆O₁₁ | 5 |
| | B | 30 | 55 | La₂O₃ | 5 | Pr₆O₁₁ | 10 |
| 9 | A | 30 | 63 | La₂O₃ | 2 | Nd₂O₃ | 5 |
| | B | 25 | 60 | La₂O₃ | 5 | Nd₂O₃ | 10 |
| 10 | A | 30 | 62 | Nd₂O₃ | 3 | Pr₆O₁₁ | 5 |
| | B | 30 | 57 | Nd₂O₃ | 5 | Pr₆O₁₁ | 8 |
| 11 | A | 40 | 54 | La₂O₃ | 3 | Sm₂O₃ | 3 |
| | B | 30 | 55 | La₂O₃ | 5 | Sm₂O₃ | 10 |
| 12 | A | 40 | 51,5 | Nd₂O₃ | 3,5 | Y₂O₃ | 5 |
| | B | 30 | 55 | Nd₂O₃ | 5 | Y₂O₃ | 10 |

## Patentansprüche

1. Katalysator, der zwei Schichten auf einem inerten Katalysatorträger umfasst, wobei
• eine Schicht A mindestens ein Platingruppenmetall, sowie ein Cer/Zirkonium/SE-Mischoxid enthält und
• eine auf Schicht A aufgebrachte Schicht B mindestens ein Platingruppenmetall, sowie ein Cer/Zirkonium/SE-Mischoxid enthält,
wobei SE für ein Seltenerdmetall außer Cer steht,
**dadurch gekennzeichnet, dass** der Anteil des SE-Oxids im Cer/Zirkonium/SE-Mischoxid von Schicht A kleiner ist als der Anteil des SE-Oxids im Cer/Zirkonium/SE-Mischoxid von Schicht B, jeweils gerechnet in Gew.-% und bezogen auf das Cer/Zirkonium/SE-Mischoxid und wobei das SE-Oxid in den Cer/Zirkonium/SE-Mischoxiden eine Mischung aus Lanthanoxid und Yttriumoxid ist.

2. Katalysator gemäß Anspruch 1, **dadurch gekennzeichnet, dass** Schicht A und Schicht B als Platingruppenmetall unabhängig voneinander Platin, Palladium, Rhodium oder Mischungen aus mindestens zwei dieser Platingruppenmetalle enthalten.

3. Katalysator gemäß Anspruch 1 und/oder 2, **dadurch gekennzeichnet, dass** als Platingruppenmetall Schicht A Platin, Palladium oder Platin und Palladium und Schicht B Palladium, Rhodium oder Palladium und Rhodium enthält.

4. Katalysator gemäß einem oder mehreren der Ansprüche 1 bis 3, **dadurch gekennzeichnet, dass** als Platingruppenmetall Schicht A Palladium und Schicht B Rhodium oder Palladium und Rhodium enthält.

5. Katalysator gemäß einem oder mehreren der Ansprüche 1 bis 4, **dadurch gekennzeichnet, dass** Schicht A und Schicht B aktives Aluminiumoxid enthalten.

6. Katalysator gemäß Anspruch 5, **dadurch gekennzeichnet, dass** das Platingruppenmetall in Schicht A und/oder in Schicht B vollständig oder zum Teil auf aktivem Aluminiumoxid geträgert ist.

7. Katalysator gemäß einem oder mehreren der Ansprüche 1 bis 6, **dadurch gekennzeichnet, dass** der Anteil des SE-Oxids im Cer/Zirkonium/SE-Mischoxid in Schicht A 1 bis 12 Gew.-%, bevorzugt 3 bis 10 Gew.-% und besonders bevorzugt 6 bis 9 Gew.-%, jeweils bezogen auf das Cer/Zirkonium/SE-Mischoxid, beträgt.

8. Katalysator gemäß einem oder mehreren der Ansprüche 1 bis 7, **dadurch gekennzeichnet, dass** der Anteil des SE-Oxids im Cer/Zirkonium/SE-Mischoxid in Schicht B 2 bis 25 Gew.-%, bevorzugt 10 bis 20 Gew.-% und besonders bevorzugt 14 bis 18 Gew.-%, jeweils bezogen auf das Cer/Zirkonium/SE-Mischoxid, beträgt.

9. Katalysator gemäß einem oder mehreren der Ansprüche 1 bis 8, **dadurch gekennzeichnet, dass** das Gewichtsverhältnis von Ceroxid zu Zirkoniumoxid im Cer/Zirkonium/SE-Mischoxid in Schicht A 0,1 bis 1,0, bevorzugt 0,2 bis 0,7, besonders bevorzugt 0,3 bis 0,5 beträgt.

10. Katalysator gemäß einem oder mehreren der Ansprüche 1 bis 9, **dadurch gekennzeichnet, dass** das Gewichtsverhältnis von Ceroxid zu Zirkoniumoxid im Cer/Zirkonium/SE-Mischoxid in Schicht B 0,1 bis 1,0, bevorzugt 0,2 bis 0,7, besonders bevorzugt 0,3 bis 0,5 beträgt.

11. Katalysator gemäß einem oder mehreren der Ansprüche 1 bis 10, **dadurch gekennzeichnet, dass** er zwei Schichten auf einem inerten Katalysatorträger umfasst, wobei
• eine Schicht A Palladium, aktives Aluminiumoxid, sowie ein Cer/Zirkonium/Lanthan/Yttrium-Mischoxid enthält und
• eine auf Schicht A aufgebrachte Schicht B Rhodium oder Palladium und Rhodium, aktives Aluminiumoxid, sowie ein Cer/Zirkonium/Lanthan/Yttrium-Mischoxid enthält,
**dadurch gekennzeichnet, dass** der Anteil der Summe an Lanthanoxid und Yttriumoxid im Cer/Zirkonium/Lanthan/Yttrium-Mischoxid von Schicht A kleiner ist als der Anteil der Summe an Lanthanoxid und Yttriumoxid im Cer/Zirkonium/ Lanthan/Yttrium-Mischoxid von Schicht B, jeweils gerechnet in Gew.-% und bezogen auf das Cer/Zirkonium/Lanthan/ Yttrium-Mischoxid.

12. Katalysator gemäß Anspruch 11, **dadurch gekennzeichnet, dass** der Anteil der Summe aus Lanthanoxid und Yttriumoxid im Cer/Zirkonium/ Lanthan/Yttrium-Mischoxid der Schicht A 6 bis 9 Gew.-% bezogen auf das Cer/Zirkonium/Lanthan/Yttrium-Mischoxid der Schicht A und im Cer/Zirkonium/Lanthan/Yttrium-Mischoxid der Schicht B 14 bis 18 Gew.-% bezogen auf das Cer/Zirkonium/Lanthan/Yttrium-Mischoxid der Schicht B beträgt, jeweils gerechnet in Gew.-% und bezogen auf das Cer/Zirkonium/Lanthan/Yttrium-Mischoxid.

13. Katalysator gemäß einem oder mehreren der Ansprüche 1 bis 12, **dadurch gekennzeichnet, dass** Schicht A direkt auf dem inerten Katalysatorträger liegt.

## Claims

1. Catalyst comprising two layers on an inert catalyst support, wherein
• a layer A contains at least one platinum group metal as well as a cerium/zirconium/SE mixed oxide, and
• a layer B applied onto layer A contains at least one platinum group metal as well as a cerium/zirconium/SE mixed oxide,
wherein SE stands for a rare earth metal other than cerium, **characterized in that** the proportion of the SE oxide in the cerium/zirconium/SE mixed oxide of layer A is less than the proportion of the SE oxide in the cerium/zirconium/SE mixed oxide of layer B, respectively calculated in wt% and relative to the cerium/zirconium/SE mixed oxide, and wherein the SE oxide in the cerium/zirconium/SE mixed oxides is a mixture of lanthanum oxide and yttrium oxide.

2. Catalyst according to claim 1, **characterized in that** layer A and layer B, independently of each other, contain, as platinum group metal, platinum, palladium, rhodium, or mixtures of at least two of these platinum group metals.

3. Catalyst according to claim 1 and/or 2, **characterized in that,** as platinum group metal, layer A contains platinum, palladium, or platinum and palladium, and layer B contains palladium, rhodium, or palladium and rhodium.

4. Catalyst according to one or more of claims 1 through 3, **characterized in that,** as platinum group metal, layer A contains palladium, and layer B contains rhodium, or palladium and rhodium.

5. Catalyst according to one or more of claims 1 through 4, **characterized in that** layer A and layer B contain active aluminum oxide.

6. Catalyst according to claim 5, **characterized in that** the platinum group metal in layer A and/or in layer B is supported wholly or in part on active aluminum oxide.

7. Catalyst according to one or more of claims 1 through 6, **characterized in that** the proportion of the SE oxide in the cerium/zirconium/SE mixed oxide in layer A is 1 to 12 wt%, preferably 3 to 10 wt%, and especially preferably 6 to 9 wt%, respectively relative to the cerium/zirconium/SE mixed oxide.

8. Catalyst according to one or more of claims 1 through 7, **characterized in that** the proportion of the SE oxide in the cerium/zirconium/SE mixed oxide in layer B is 2 to 25 wt%, preferably 10 to 20 wt%, and especially preferably 14 to 18 wt%, respectively relative to the cerium/zirconium/SE mixed oxide.

9. Catalyst according to one or more of claims 1 through 8, **characterized in that** the weight ratio of cerium oxide to zirconium oxide in the cerium/zirconium/SE mixed oxide in layer A is 0.1 to 1.0, preferably 0.2 to 0.7, especially preferably 0.3 to 0.5.

10. Catalyst according to one or more of claims 1 through 9, **characterized in that** the weight ratio of cerium oxide to zirconium oxide in the cerium/zirconium/SE mixed oxide in layer B is 0.1 to 1.0, preferably 0.2 to 0.7, especially preferably 0.3 to 0.5.

11. Catalyst according to one or more of claims 1 through 10, **characterized in that** it comprises two layers on an inert catalyst support, wherein
• a layer A contains palladium, active aluminum oxide as well as a cerium/zirconium/lanthanum/yttrium mixed oxide, and
• a layer B applied onto layer A contains rhodium or palladium and rhodium, active aluminum oxide as well as a cerium/zirconium/lanthanum/yttrium mixed oxide,
**characterized in that** the proportion of the sum of lanthanum oxide and yttrium oxide in the cerium/zirconium/lanthanum/yttrium mixed oxide of layer A is less than the proportion of the sum of lanthanum oxide and yttrium oxide in the cerium/zirconium/lanthanum/yttrium mixed oxide of layer B, calculated respectively in wt% and relative to the cerium/zirconium/lanthanum/yttrium mixed oxide.

12. Catalyst according to claim 11, **characterized in that** the proportion of the sum of lanthanum oxide and yttrium oxide is 6 to 9 wt% in the cerium/zirconium/lanthanum/yttrium mixed oxide of layer A relative to the cerium/zirconium/lanthanum/yttrium mixed oxide of layer A, and 14 to 18 wt% in the cerium/zirconium/lanthanum/yttrium mixed oxide of layer B relative to the cerium/zirconium/lanthanum/yttrium mixed oxide of layer B, respectively calculated in wt% and relative to the cerium/zirconium/lanthanum/yttrium mixed oxide.

13. Catalyst according to one or more of claims 1 through 12, **characterized in that** layer A lies directly on the inert catalyst support.

## Revendications

1. Catalyseur, comprenant deux couches sur un support de catalyseur inerte, dans lequel
• une couche A contient au moins un métal du groupe du platine, ainsi qu'un oxyde mixte cérium/zirconium/SE et
• une couche B appliquée sur la couche A contient au moins un métal du groupe du platine et un oxyde mixte cérium/zirconium/SE,
dans lequel SE représente un métal des terres rares autre que le cérium, **caractérisé en ce que** la proportion d'oxyde SE dans l'oxyde mixte cérium/zirconium/SE de la couche A est inférieure à la proportion d'oxyde SE dans l'oxyde mixte cérium/zirconium/SE de la couche B, respectivement calculée en % en poids et par rapport à l'oxyde mixte cérium/zirconium/SE et dans lequel l'oxyde SE dans les oxydes mixtes cérium/zirconium/RE est un mélange d'oxyde de lanthane et d'oxyde d'yttrium.

2. Catalyseur selon la revendication 1, **caractérisé en ce que** la couche A et la couche B contiennent indépendamment l'une de l'autre du platine, du palladium, du rhodium ou des mélanges d'au moins deux de ces métaux du groupe du platine comme métal du groupe du platine.

3. Catalyseur selon la revendication 1 et/ou 2, **caractérisé en ce que** la couche A contient du platine, du palladium ou du platine et du palladium et la couche B contient du palladium, du rhodium ou du palladium et du rhodium comme métal du groupe du platine.

4. Catalyseur selon une ou plusieurs des revendications 1 à 3, **caractérisé en ce que** la couche A contient du palladium et la couche B contient du rhodium ou du palladium et du rhodium comme métal du groupe du platine.

5. Catalyseur selon l'une ou plusieurs des revendications 1 à 4, **caractérisé en ce que** la couche A et la couche B contiennent une alumine active.

6. Catalyseur selon la revendication 5, **caractérisé en ce que** le métal du groupe du platine dans la couche A et/ou dans la couche B est totalement ou partiellement supporté sur de l'alumine active.

7. Catalyseur selon une ou plusieurs des revendications 1 à 6, **caractérisé en ce que** la proportion d'oxyde SE dans l'oxyde mixte cérium/zirconium/SE dans la couche A est de 1 à 12 % en poids, de préférence de 3 à 10 % en poids et en particulier de préférence de 6 à 9 % en poids, respectivement par rapport à l'oxyde mixte cérium/zirconium/SE.

8. Catalyseur selon une ou plusieurs des revendications 1 à 7, **caractérisé en ce que** la proportion d'oxyde SE dans l'oxyde mixte cérium/zirconium/SE dans la couche B est de 2 à 25 % en poids, de préférence de 10 à 20 % en poids et en particulier de préférence de 14 à 18 % en poids, respectivement par rapport à l'oxyde mixte cérium/zirconium/SE.

9. Catalyseur selon une ou plusieurs des revendications 1 à 8, **caractérisé en ce que** le rapport en poids oxyde de cérium-oxyde de zirconium dans l'oxyde mixte cérium/zirconium/SE dans la couche A est de 0,1 à 1,0, de préférence de 0,2 à 0,7, en particulier de préférence de 0,3 à 0,5.

10. Catalyseur selon une ou plusieurs des revendications 1 à 9, **caractérisé en ce que** le rapport en poids oxyde de cérium-oxyde de zirconium dans l'oxyde mixte cérium/zirconium/SE dans la couche B est de 0,1 à 1,0, de préférence de 0,2 à 0,7, en particulier de préférence de 0,3 à 0,5.

11. Catalyseur selon une ou plusieurs des revendications 1 à 10, **caractérisé en ce qu'**il comprend deux couches sur un support de catalyseur inerte, dans lequel
• une couche A contient du palladium, une alumine active, ainsi qu'un oxyde mixte cérium/zirconium/lanthane/yttrium et
• une couche B appliquée sur la couche A contient du rhodium ou du palladium et du rhodium, une alumine active, ainsi qu'un oxyde mixte cérium/zirconium/lanthane/yttrium,
**caractérisé en ce que** la proportion de la somme d'oxyde de lanthane et d'oxyde d'yttrium dans l'oxyde mixte cérium/zirconium/lanthane/yttrium de la couche A est inférieure à la proportion de la somme d'oxyde de lanthane et d'oxyde d'yttrium dans l'oxyde mixte cérium/zirconium/lanthane/yttrium de la couche B, respectivement calculée en % en poids et par rapport à l'oxyde mixte cérium/zirconium/lanthane/yttrium.

12. Catalyseur selon la revendication 11, **caractérisé en ce que** la proportion de la somme d'oxyde de lanthane et d'oxyde d'yttrium dans l'oxyde mixte cérium/zirconium/lanthane/yttrium de la couche A est de 6 à 9 % en poids et par rapport à l'oxyde mixte cérium/zirconium/lanthane/yttrium et dans l'oxyde mixte cérium/zirconium/lanthane/yttrium de la couche B de 14 à 18 % en poids et par rapport à l'oxyde mixte cérium/zirconium/lanthane/yttrium de la couche B, respectivement calculée en % en poids et par rapport à l'oxyde mixte cérium/zirconium/lanthane/yttrium.

13. Catalyseur selon l'une ou plusieurs des revendications 1 à 12, **caractérisé en ce que** la couche A repose directement sur le support de catalyseur inerte.
